# EUROPÄISCHE PATENTANMELDUNG

(11) **EP 2 243 652 A1**
(43) Veröffentlichungstag der Anmeldung: **27.10.2010**
(21) Anmeldenummer: 10004058.3
(22) Anmeldetag: 16.04.2010
(51) Int. Cl.: B60K 15/077, B65D 90/52

(54) **Vorrichtung zum Dämpfen von Schwappbewegungen eines flüssigen Mediums in einem Tank**

(30) Priorität: 17.04.2009 DE 102009017949
(71) Anmelder: Rhodius GmbH, 91781 Weissenburg (DE)
(72) Erfinder: Appel, Erwin, 91785 Pleinfeld (DE); Schülein, Wolfgang, 91757 Treuchtlingen (DE)
(74) Vertreter: Weigel, Matthias

(57) **Zusammenfassung**

Die Erfindung betrifft eine Vorrichtung (10) zum Dämpfen von Schwappbewegungen eines flüssigen Mediums in einem Tank, insbesondere in einem Flüssigkeitstank eines Kraft-, See- oder Luftfahrzeuges. Die Vorrichtung (10) hat eine geschlossene Hülle (16) aus Gestrick, Gewebe oder Gewirk, in welcher mehrere fluiddurchlässige, im wesentlichen saugunfähige, großvolumige Füllkörper (12) geringer Dichte aufgenommen sind.

## Beschreibung

Die Erfindung betrifft eine Vorrichtung zum Dämpfen von Schwappbewegungen eines flüssigen Mediums in einem Tank, insbesondere in einem Flüssigkeitstank eines Kraft-, See- oder Luftfahrzeuges, mit mehreren fluiddurchlässigen, im wesentlichen saugunfähigen, großvolumigen Füllkörpern geringer Dichte. Ferner betrifft die Erfindung einen Tank für ein flüssiges Medium, der mit einer erfindungsgemäßen Vorrichtung ausgestattet ist.

Bei Tanks für flüssige Medien, wie Kraftstofftanks, Wassertanks, etc., die in bewegten Fahrzeugen, so Kraftfahrzeugen, Seefahrzeugen oder Luftfahrzeugen, angeordnet sind, besteht generell das Problem, dass das flüssige Medium bei nicht vollständig gefülltem Tank bei Richtungsänderungen aufgrund von Trägheit gegen die Innenwand des Tanks aufläuft und im Tank hin und her schwappt. Bei großen Fahrzeugen kommt es hierbei je nach Form, Anordnung und Material des Tanks zu ungewollter Geräuschentwicklung. Bei großen Tanks mit großen Füllmengen oder bei Tanks in kleinen Fahrzeugen kann das sich bewegende flüssige Medium im Tank auch zur Beeinträchtigung der Fahreigenschaften insbesondere der Beeinflussung der Bewegungsrichtung des Fahrzeuges führen.

Um die Schwappbewegungen in einem Tank zu begrenzen, werden insbesondere große Tanks in Kammern untergliedert. Ferner wurde versucht, in den Tank kleinerer Fahrzeuge, beispielweise Kraftstofftanks von Personenkraftwagen, Füllkörper einzubringen, die einerseits fluiddurchlässig und im wesentlichen saugunfähig sind, anderseits bei möglichst großem Volumen eine geringe Dichte aufweisen (vgl. DE 197 29 818). Diese kleinen Füllkörper sollten sich in dem im Tank enthaltenen Medium gleichmäßig verteilen und so Schwappbewegungen dämpfen. Leider zeigte sich bei umfangreichen Versuchen, dass sich die erwünschte Dämpfungswirkung nicht einstellte, da sich die Füllkörper meist in weniger durchströmten Tankabschnitten sammelten und so die gewünschte Dämpfungswirkung nicht auftrat.

Ausgehend von diesem Stand der Technik ist es Aufgabe der Erfindung, eine Vorrichtung zum Dämpfen von Schwappbewegungen eines flüssigen Mediums in einem Tank sowie einen Tank mit einer derartigen Vorrichtung anzugeben, mit der bzw. bei dem eine verglichen mit dem Stand der Technik verbesserte Dämpfungswirkung erzielbar ist.

Erfindungsgemäß wird diese Aufgabe durch eine Vorrichtung mit den Merkmalen nach Anspruch 1 und insbesondere dadurch gelöst, dass die Füllkörper in einer geschlossenen Hülle aus Gestrick und/oder Gewirk und/oder Gewebe aufgenommen sind. Ferner wird die Erfindung durch einen Tank mit den Merkmalen nach Anspruch 14 gelöst.

Bei der Erfindung sind die Füllkörper in einer geschlossenen Hülle aufgenommen und können sich so nicht mehr frei im Tank bewegen, was im ersten Moment eher überrascht, da man bisher davon ausgegangen war, dass gerade die im Medium freibeweglichen Füllkörper die Schwappbewegungen des Mediums besonders gut dämpfen würden. War man bisher der Auffassung, dass aufgrund der mit abnehmendem Flüssigkeitsstand im Tank ansteigenden Anzahl an Füllkörper im Medium bezogen auf das reduzierte Volumen eine besonders gute Dämpfungswirkung erreichbar schien, geht die Erfindung gezielt einen anderen Weg.

So werden die Füllkörper, bei denen es sich um Formelemente handelt, die einerseits fluiddurchlässig und im wesentlichen saugunfähig sind, also das flüssige Medium nicht speichern, und die andererseits bei möglichst geringer Dichte ein möglichst großes Volumen einnehmen sollen, in der abgeschlossenen Hülle an einer freien Bewegung im Tank gehindert. Die Hülle kann dabei entweder vollständig oder auch nur teilweise mit Füllkörpern gefüllt sein, so dass sich die Füllkörper bei letzterem innerhalb der Hülle dennoch frei bewegen können. Auch können Füllkörper unterschiedlicher Ausbildung oder Größe in der Hülle aufgenommen sein. Die Hülle selbst kann entweder an einer vorgegebenen Stelle im Tank angeordnet und gegebenenfalls sogar befestigt oder frei beweglich im Tank angeordnet sein.

Ist zum Beispiel bekannt, dass in einem bestimmten Tankabschnitt besonders starke Schwappbewegungen aufgrund der Tankform entstehen, ist es von Vorteil, die Hülle gerade in diesem Tankabschnitt anzuordnen und gegebenenfalls auch zu befestigen. Durch das Befestigen der mit den Füllkörpern gefüllten Hülle im Bereich des auf- und ablaufenden Mediums wird erreicht, dass das Medium durch die Hülle und die darin enthaltenen Füllkörper strömen muss, wobei insbesondere durch die Gestrick-, Gewirk- bzw. Gewebestruktur der Hülle einerseits und die Ausbildung der Formkörper andererseits der Strömungswiderstand für das Medium in diesem Bereich deutlich erhöht ist, so dass die Bewegung des Mediums gezielt gedämpft wird. Dabei ist zu bemerken, dass die Hülle entweder einheitlich in derselben Gestrick-, Gewirk- oder Gewebeart gefertigt ist oder auch aus unterschiedlichen Gewirk-, Gewebe- und/oder Gestrickarten hergestellt sein kann, die in geeigneter Weise miteinander verbunden sind. Auch können sich einzelne Abschnitte der Hülle in der Maschendichte oder Schlingengröße voneinander unterscheiden, um auf diese Weise Hüllenabschnitte mit unterschiedlichen Strömungswiderständen auszubilden.

Soll die erfindungsgemäße Vorrichtung die Schwappbewegung insgesamt vermindern, ist es von Vorteil, die Hülle frei beweglich im Tank anzuordnen, so dass sie im Medium schwimmt und an oder knapp unterhalb des Flüssigkeitsspiegels treibend die Schwappbewegungen dämpft.

Als Material für die Füllkörper und die Hülle wird ein Werkstoff verwendet, der von dem Medium nicht angegriffen oder zersetzt wird. Kommen die Füllkörper und die Hülle beispielsweise in einem Kraftstofftank zum Einsatz, sind die Füllkörper und die Hülle aus einem gegenüber Kraftstoff beständigen Werkstoff, beispielsweise einem kraftstoffbeständigen Kunststoffmaterial, gefertigt. Erfindungsgemäß kann die Hülle jedoch auch aus einem anderen Werkstoff gefertigt sein als die Füllkörper, beispielsweise aus unterschiedlichen Kunststoffmaterialien. Auch können die Hülle und die Füllkörper aus unterschiedlichen Werkstoffen, beispielsweise einer Kombination aus metallischen Werkstoffen und Kunststoffen, gefertigt sein. Wird die erfindungsgemäße Vorrichtung beispielsweise in einen Süßwassertank eingesetzt, kann aus Gründen der Hygiene für die Füllkörper und die Hülle ein korrosionsbeständiges Material, beispielsweise ein Edelstahl, verwendet werden, der gut zu desinfizieren ist.

Des weiteren liegt es im Rahmen der Erfindung mehrere Hüllen in einem Tank gemeinsam einzusetzen, die entweder identisch oder auch unterschiedlich ausgebildet sein können.

Weitere Vorteile und vorteilhafte Weiterbildungen ergeben sich aus der nachfolgenden Beschreibung, der Zeichnung sowie den Unteransprüchen.

So wird bei einer besonders bevorzugten Ausführungsform vorgeschlagen als Hülle einen Schlauch oder eine Matte aus Gestrick und/oder Gewirk und/oder Gewebe zu verwenden. Durch entsprechendes Zusammenlegen oder Umfalten kann auf diese Weise der Grundkörper für die Hülle ausgebildet werden. Der Schlauch bzw. die Matte muss dann nur noch nach dem Befüllen mit den Füllkörpern an den Rändern oder Kanten durch Verkleben und/oder Verschweißen und/oder Vernähen verschlossen werden. Kommt ein thermoplastisches Kunststoffmaterial für die Hülle zum Einsatz, eignet sich hierzu insbesondere das Ultraschall- oder das Laserschweißen.

Um ein Sammeln der Füllkörper in einem Bereich der Hülle zu vermeiden, insbesondere, wenn die Hülle nur zum Teil mit Füllkörpern gefüllt ist, wird vorgeschlagen, die Hülle in mindestens zwei oder mehr als zwei Kammern zu untergliedern, wobei in jeder Kammer zumindest ein Füllkörper aufgenommen ist. Die Kammern können dabei identisch oder unterschiedlich bemessen sein. Auch liegt es im Rahmen der Erfindung, unterschiedliche Anzahlen an Füllkörper in den unterschiedlichen Kammern vorzusehen. Die Kammern sind durch Verschweißen und/oder Verkleben und/oder Vernähen des Hüllmaterials ausgebildet, wobei sich besonders bevorzugt das Verschweißen, insbesondere das Ultraschallschweißen oder das Laserschweißen, eignet, das in entsprechenden Einrichtungen automatisiert durchgeführt werden kann.

Ferner wird vorgeschlagen, die Hülle aus einem Kunststoffmaterial zu fertigen und die Hülle durch Warmumformung, vorzugsweise durch wärmeunterstützte Biege- oder Faltprozesse, in zumindest anteilig formsteife Segmente zu untergliedern, wobei zumindest in einem der Segmente zumindest ein Füllkörper aufgenommen ist. Unter dem Begriff "anteilige Formsteifigkeit" wird verstanden, dass das Segment durch die Warmumformung in vorbestimmten Abschnitten versteift ist, während zu diesen benachbarte Abschnitte des Segmentes elastisch oder nachgiebig bleiben. Insbesondere durch das Warmumformen lassen sich zumindest abschnittsweise formsteife Strukturen ausbilden, die eine definierte Positionierung der Hülle im Tank zulassen. So können die Segmente derart geformt werden, dass die zwischen den Segmenten ausgebildeten Vertiefungen vorgegebene Formen und Verläufe aufweisen. Die Segmente und die zwischen den Segmenten ausgebildeten Vertiefungen können hierbei an im Tank ausgebildete Vorsprünge und Vertiefungen angepasst, vorzugsweise komplementär zu diesen, ausgebildet sein. Auf diese Weise ist die Hülle in den im Tank ausgebildeten Vorsprüngen und Vertiefungen sicher gehalten. Ferner ist es von Vorteil, wenn bei Verwendung mehrerer Hüllen, die gemeinsam in einem Tank benachbart nebeneinander angeordnet sein sollen, die Stoßflächen, an denen die Hüllen aneinander zur Anlage kommen, mit entsprechenden Vertiefungen und Segmente versehen sind, welche komplementär zueinander ausgebildet sind. Nach dem Einsetzen der Hüllen in den Tank sind die Vertiefungen und Segmenten zumindest abschnittsweise mitein-ander in Eingriff, so dass die Hüllen zwar einzeln in den Tank einsetzbar sind, im Tank zusammengesetzt jedoch eine gemeinsame Einheit bilden.

Die Hülle ist besonders bevorzugt aus mehreren miteinander durch Verschweißen und/oder Verkleben und/oder Vernähen verbundenen Hüllenabschnitten gefertigt. Die Ausbildung der Hülle aus verschiedenen Hüllenabschnitten hat zum einen den Vorteil, dass aus denselben Hüllenabschnitten unterschiedlich große Hüllen gefertigt werden können, indem je nach Größe und Form der Hülle identische oder unterschiedlich bemessene und geformte Hüllenabschnitte miteinander verbunden werden. Ferner können die Hüllenabschnitte zur gezielten Beeinflussung des Strömungswiderstandes auch unterschiedliche Eigenschaften aufweisen, sich beispielsweise in der Machart (Gestrick, Gewebe oder Gewirk) oder auch in der Maschendichte, der Schlaufengröße, der Webart, der Webdichte etc. voneinander unterscheiden.

Um die Hülle in einer definierten Position im Tank zu sichern, wird vorgeschlagen, an der Hülle mindestens einen Befestigungsabschnitt vorzusehen, an dem die Hülle im Tank vorzugsweise lösbar befestigt werden kann. Der Befestigungsabschnitt ist hierzu vorzugsweise verstärkt ausgebildet, um den entstehenden Haltekräften wirksam widerstehen zu können. Bei Vorsehen mehrerer Befestigungsabschnitte sind diese vorzugsweise so an der Hülle ausgebildet, dass die Hülle im Tank beabstandet an mehreren Stellen befestigt und auf diese Weise gesichert ist.

Bei einer besonders bevorzugten Weiterbildung dieser Ausführungsform ist am Befestigungsabschnitt ein Befestigungselement vorgesehen bzw. vormontiert. Als Befestigungselement eignet sich beispielsweise ein Clip, eine Klemmeinrichtung, ein Haken oder ähnliches, das einfach und sicher im Tank befestigt werden kann. Der Tank kann hierzu gleichfalls mit geeigneten Befestigungsflanschen und ähnlichem für die Hülle ausgestattet sein. Alternativ oder ergänzend hierzu kann, wenn die erfindungsgemäße Vorrichtung beispielsweise als Standardausrüstung vorgesehen werden soll, auch der Tank mit entsprechenden Befestigungselementen ausgestattet sein.

Gleichfalls alternativ oder ergänzend zu der Weiterbildung mit Befestigungselement an der Hülle, kann am Befestigungsabschnitt mindestens eine Befestigungsöse vorgesehen sein, die mit einem im Tank vorgesehenen Befestigungselement in Eingriff zu bringen ist.

Bei einer besonders bevorzugten Ausführungsform ist die Hülle mit Füllkörpern gefüllt, wobei zumindest einer der Füllkörper elastisch ist und ausgehend von seinem maximalen Volumen im entspannten Zustand auf einen Bruchteil seines maximalen Volumens verdichtet werden kann. Beispielsweise kann der Füllkörper in entspanntem Zustand ein Volumen von 10cm³ einnehmen und durch Zusammendrücken auf ein Volumen von 2cm³ verdichtet werden, so dass der Füllkörper auf ein Fünftel seines maximalen Volumens verdichtet ist. Durch seine Elastizität nimmt der Füllkörper nach Wegnahme der äußeren deformierenden Kräfte wieder sein ursprüngliches Volumen an.

Bei einer besonders bevorzugten Weiterbildung dieser mit elastischen Füllkörpern gefüllten Hülle nimmt die Hülle, wenn die Füllkörper entspannt sind, eine Raumform ein, die zumindest abschnittsweise der Raumform eines Abschnittes des Tanks entspricht, in welchen die Hülle einzusetzen ist. Wird die Hülle in den Tank gesetzt, werden die Füllkörper zusammengedrückt, so dass die Hülle in den Abschnitt des Tanks eingesetzt werden kann. Nachdem sich die Füllkörper wieder entspannt haben, ist die Hülle durch die Vorspannkräfte und die vorgegebene Raumform, in dem Tankabschnitt sicher gehalten. Auf diese Weise können auch Hinterschneidungen, Verjüngen und ähnliches mit der Hülle ausgefüllt werden. Auch hier kann die Hülle zusätzlich mit den oben beschriebenen Befestigungsabschnitten versehen und auf diese Weise sicher im Tank gehalten sein.

Bei Verwendung elastischer Füllkörper ist die Hülle und die darin enthaltenen Füllkörper vorzugsweise soweit zu verdichten, dass die Hülle durch die Befüllungs- oder Belüftungsöffnung des Tanks in diesen einzubringen ist. Sind die Füllkörper zu groß oder nicht zu verdichten, ist es auch möglich, die Vorrichtung bereits beim Zusammenbau des Tanks in diesen einzusetzen.

Der Füllkörper kann aus verschiedensten Materialien gebildet sein, so aus einem Metallmaterial oder einem Kunststoffmaterial. Vorzugsweise sind die Füllkörper elastisch ausgebildet und nehmen nach Wegnahme äußerer deformierender Kräfte zumindest annähernd wieder ihre ursprüngliche Form ein. So wird bei einer besonders bevorzugten Ausführungsform vorgeschlagen, den Füllkörper aus einem Gewebe, einem Gestrick oder einem Gewirk zu fertigen, welches zur Erhöhung des Volumens in zumindest einem Bereich des Gewebes, des Gestricks oder des Gewirks unter Bildung von Falten zusammengezogen ist.

Das Material und die Form des Füllkörpers können jedoch auch so gestaltet sein, dass der Füllkörper eine vergleichsweise hohe Formsteifigkeit aufweist und kaum elastisch komprimierbar ist. In einem derartigen Fall sind die Füllkörper beispielsweise als käfigartige Formkörper oder Formelemente ausgebildet, welche in der Hülle aufgenommen sind. Soll die Vorrichtung nachträglich in den Tank eingesetzt werden, müssen die Füllkörper so klein dimensioniert sein, dass sie gemeinsam mit der Hülle durch eine der Öffnungen in den Tank einsetzbar sind.

Der Füllkörper kann auch als Ringform ausgebildet sein, bei der ein Gestrickschlauch ringförmig an seinen offenen Enden zur Bildung der Ringform verbunden ist. Im Inneren des Gestrickschlauches kann auch weiteres Füllmaterial, beispielsweise ein weiterer Gestrickschlauch oder ähnliches aufgenommen sein.

Die oben gegebenen Erläuterungen zeigen, dass unterschiedlichste Formen von Füllkörpern und Hüllen sowie unterschiedlichste Materialien verwendet werden können. Entscheidend für die Erfindung ist, dass in der Hülle wenigstens ein Füllkörper, vorzugsweise mehrere, Füllkörper aufgenommen ist, der gemeinsam mit der Hülle die Strömungen des flüssigen Mediums im Tank soweit beeinflusst und beschränkt, dass die Entstehung von Schwappbewegungen verhindert, zumindest aber vermindert ist.

Gemäß einem zweiten Aspekt betrifft die Erfindung einen mit der erfindungsgemäßen Vorrichtung ausgestatteten Tank.

Nachfolgend wird die Erfindung anhand von fünf unterschiedlichen Ausführungsformen unter Bezugnahme auf die Zeichnung näher erläutert. Hierin zeigt:
- Fig. 1: eine Seitenansicht eines Füllkörpers, der in der erfindungsgemäßen Vorrichtung verwendet werden kann;
- Fig. 2: eine perspektivische Darstellung einer ersten Ausführungsform einer erfindungsgemäßen Vorrichtung mit einer Hülle mit formsteifen Seg- menten;
- Fig. 3: eine perspektivische Darstellung einer zweiten Ausführungsform einer erfindungsgemäßen Vorrichtung mit einer Hülle mit runder Grundform;
- Fig. 4: eine perspektivische Darstellung einer dritten Ausführungsform einer erfindungsgemäßen Vorrichtung mit einer Hülle mit dreieckiger Grund- form;
- Fig. 5: eine perspektivische Darstellung einer vierten Ausführungsform einer erfindungsgemäßen Vorrichtung mit einer Hülle mit quaderförmiger Grundform; und
- Fig. 6: eine perspektivische Darstellung einer fünften Ausführungsform einer erfindungsgemäßen Vorrichtung mit einer etwa zylinderförmigen Hülle.

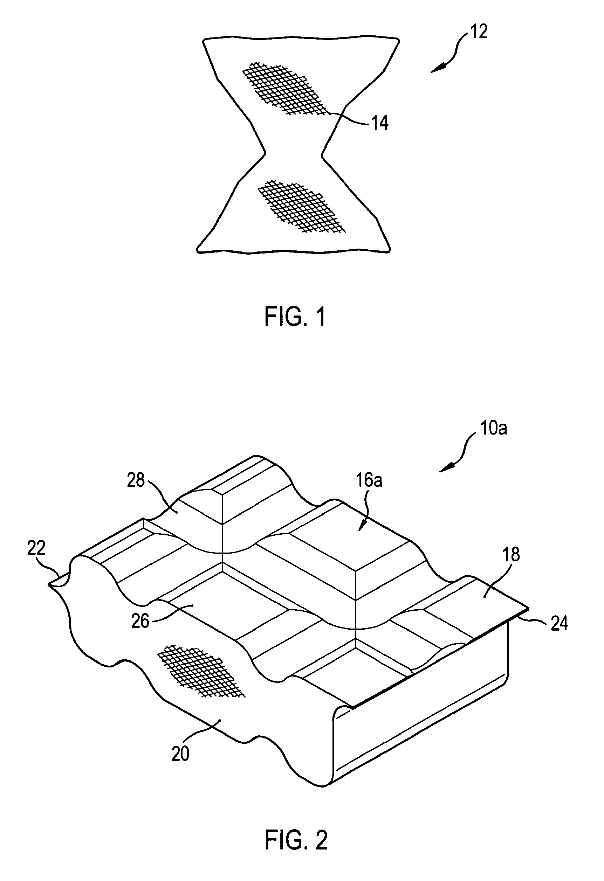

Fig. 1 zeigt in Seitenansicht einen für die erfindungsgemäße Vorrichtung 10 (vgl. Fig. 2 bis 6) zu verwendenden Füllkörper 12. Der Füllkörper 12 ist aus einem

Gestrickschlauch 14 aus einem Kunststoffmaterial gefertigt. Der Gestrickschlauch 14 ist zur Ausbildung einer formsteifen Raumform in seiner Mitte durch Ziehen eines Fadens zusammengeschnürt und bildet so eine etwa eieruhrförmige Grundform.

Der Füllkörper 12 ist aus mindestens einem elastischen, nicht saugfähigen Kunststofffaden gestrickt und kann durch Zusammendrücken auf einen Bruchteil seines maximal möglichen Volumens verdichtet werden. Nach Wegnahme der äußeren deformierenden Kräfte nimmt der Füllkörper 12 zumindest annähernd wieder seine in Fig. 1 gezeigte Grundform an. Aufgrund der Verwendung des Gestricks ist das Volumen des Füllkörpers 12 bezogen auf die Dichte des Gestricks sehr hoch, so dass ein großvolumiger Füllkörper 12 mit geringer Dichte bereit-steht. Die Maschenweite des Gestricks, aus dem der Gestrickschlauch 14 besteht, ist so gewählt, dass ein flüssiges Medium, wie Wasser oder Kraftstoff, durch das Gestrick hindurchströmen kann, dabei jedoch an Strömungsgeschwindigkeit verliert.

Bei dem in Fig. 1 gezeigten Füllkörper 12 handelt es sich um eine mögliche Variante, wie der Füllkörper ausgebildet sein kann. So kann der Füllkörper 12 auch zwei oder mehr Einschnürungen aufweisen.

Die Vorrichtung 10 weist ferner eine Hülle 16 auf, von der in den weiteren Fig. 2 bis 6 unterschiedliche Ausführungsformen gezeigt sind. Die Grundfunktion der verschiedenen Ausführungsformen der Hülle 16 ist jedoch im wesentlichen die gleiche. Die Hülle 16 jedes Ausführungsbeispiels ist aus einem Gestrick gefertigt, das gleichfalls aus einem Kunststoffmaterial besteht. Die Maschenweite des Gestricks der Hülle 16 ist weiter als die des Gestricks des Füllkörpers 12, kann jedoch auch zu dieser identisch ausgebildet sein.

Die in den Fig. 2 bis 6 gezeigten Ausführungsbeispiele unterscheiden sich insbesondere hinsichtlich ihrer Formen, wie die nachfolgenden Erläuterungen zeigen werden.

In Fig. 2 ist ein erstes Ausführungsbeispiel der Vorrichtung 10a mit einer Hülle 16a gezeigt. Die Hülle 16a ist aus zwei Gestrickmatten 18 und 20 gebildet, die an ihren Längskanten 22 und 24 derart miteinander verschweißt sind, dass die Hülle 16a nach außen hin abgeschlossen ist. Die Hülle 16a selbst ist mit mehreren Füllkörpern 12 gefüllt, die aus Übersichtlichkeitsgründen nicht näher gezeigt sind.

Die Hülle 16a ist aus einem thermoplastischen Kunststoffmaterial gestrickt. Die Oberseite und die Unterseite der Hülle 16a wurden durch wärmeunterstützte Formprozesse dauerhaft so umgeformt, dass an der Oberseite und der Unterseite der Hülle 16a jeweils sechs etwa rechteckförmige Segmente 26 unterschiedlicher Abmessungen ausgebildet sind, die durch Vertiefungen 28 voneinander beabstandet sind. Durch die Segmentierung erhält die Hülle 16a eine wenn auch geringe Formsteifigkeit, die der Hülle 16a eine gewisse Stabilität verleiht. Ferner können die Segmente 26 und Vertiefungen 28 an entsprechend im Tank ausgebildete Erhebungen und Vertiefungen angepasst sein, so dass die Hülle 16a nach dem Einsetzen in den Tank in ihrer Einbaulage im Tank sicher gehalten ist.

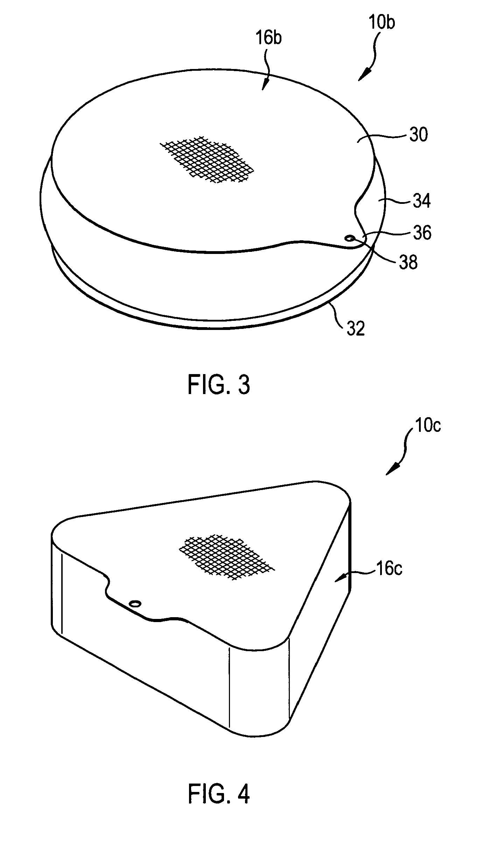

Fig. 3 zeigt eine zweite Ausführungsform der Vorrichtung 10b mit einer Hülle 16b. Auch hier ist die Hülle 16b aus einem Gestrick aus Kunststoffmaterial gefertigt. Die Hülle 16b ist aus zwei flächigen, etwa kreisförmigen Gestrickmatten 30 und 32 sowie einem Gestrickschlauch 34 gefertigt, in dem der Gestrickschlauch 34 an seinen umlaufenden Rändern jeweils mit dem umlaufenden Rand der Gestrickmatte 30 bzw. 32 durch Schweißen festverbunden ist. Auch hier sind in der Hülle 16b mehrere Füllkörper 12 aufgenommen, die aus Übersichtlichkeitsgründen nicht dargestellt sind. Zum Befestigen der Hülle 16b in dem Tank ist an der oben gezeigten Gestrickmatte 30 ferner ein Befestigungsabschnitt 36 ausgebildet, an welchem eine Befestigungsöse 38 vorgesehen ist. Die Befestigungsöse 38 dient als Befestigungsstelle für ein nicht näher gezeigtes Befestigungselement, welches die Hülle 16b vorzugsweise lösbar an einer entsprechend ausgebildeten Befestigungsstelle im Tank sichert.

Fig. 4 zeigt ein drittes Ausführungsbeispiel einer Vorrichtung 10c mit einer Hülle 16c, deren Aufbau im wesentlichen dem Aufbau der Hülle 16b des in Fig. 3 gezeigten zweiten Ausführungsbeispiels entspricht. Lediglich die Ober- und Unterseite sind bei diesem dritten Ausführungsbeispiel dreieckförmig statt kreisförmig ausgebildet. Vorteil dieses dritten Ausführungsbeispiels ist, dass mehrere derartige Hüllen 16c nebeneinander wechselweise angeordnet werden können, um eine durchgängige Vorrichtung 10 auszubilden. Dies ist insbesondere dann wünschenswert, wenn im Tank die Vorrichtung 10c großflächig angeordnet werden soll, jedoch die Zuführungsöffnung, durch die die Hüllen 16c in den Tank eingebracht werden sollen, verhältnismäßig klein ist. In einem derartigen Fall können die Hüllen 16c, die klein ausgebildet sein können, in den Tank eingebracht und im Tank zur Vorrichtung 10c zusammengesetzt werden.

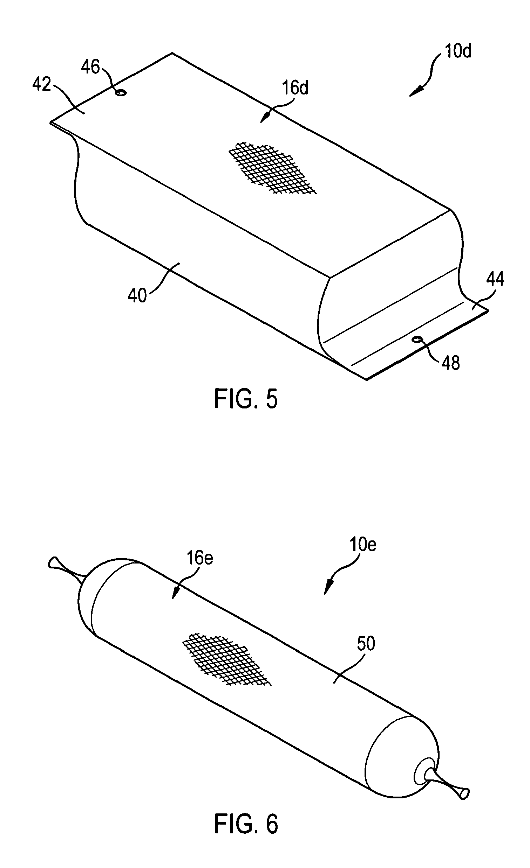

Fig. 5 zeigt ein viertes Ausführungsbeispiel einer Vorrichtung 10d mit einer Hülle 16d. Bei dieser Hülle 16d wird ein Gestrickschlauch 40 an seinen Stirnseiten verschlossen sowie durch Warmumformen an der Ober- und Unterseite eine ebene versteifte Struktur ausgebildet, wodurch sich eine in etwa quaderförmige Gesamtform ergibt. Auch hier ist die Hülle 16d mit mehreren Füllkörpern 12 befüllt (nicht näher gezeigt). Des weiteren ist an der Ober- und der Unterseite jeweils ein Befestigungsabschnitt 42 und 44 mit Befestigungsösen 46 und 48 vorgesehen.

Fig. 6 zeigt schließlich ein fünftes Ausführungsbeispiel einer Vorrichtung 10e mit einer Hülle 16e. Diese Hülle 16e ist als Gestrickschlauch 50 ausgebildet, der mit Füllkörpern 12 gefüllt und an seinen beiden Enden durch Zusammenziehen und Verschweißen geschlossen ist.

Die dargestellten Formen stellen nur einen äußerst kleinen Einblick in die Vielzahl an möglichen Gestaltungsformen dar. Wesentlich für die Erfindung ist die Durchlässigkeit für das flüssige Medium, beispielsweise Süßwasser, Kraftstoff und ähnliches, sowie die definierte Gesamtform, die ein Einsetzen, Positionieren und Verankern der erfindungsgemäßen Vorrichtung 10 im Tank ermöglicht.

### Bezugszeichenliste:

- 10: Vorrichtung
- 12: Füllkörper
- 14: Gestrickschlauch
- 16: Hülle
- 18: Gestrickmatte
- 20: Gestrickmatte
- 22: Längskante
- 24: Längskante
- 26: Segmente
- 28: Vertiefungen
- 30: Gestrickmatte
- 32: Gestrickmatte
- 34: Gestrickschlauch
- 36: Befestigungsabschnitt
- 38: Befestigungsöse
- 40: Gestrickschlauch
- 42: Befestigungsabschnitt
- 44: Befestigungsabschnitt
- 46: Befestigungsöse
- 48: Befestigungsöse
- 50: Gestrickschlauch

## Patentansprüche

1. Vorrichtung zum Dämpfen von Schwappbewegungen eines flüssigen Mediums in einem Tank, insbesondere in einem Flüssigkeitstank eines Kraft-, See- oder Luftfahrzeuges, mit mehreren fluiddurchlässigen, im wesentlichen saugunfähigen, großvolumigen Füllkörpern (12) geringer Dichte,
**dadurch gekennzeichnet,**
**dass** die Füllkörper (12) in einer geschlossenen Hülle (16) aus Gestrick und/oder Gewirk und/oder Gewebe aufgenommen sind.

2. Vorrichtung nach Anspruch 1, **dadurch gekennzeichnet, dass** die Hülle (16) an zumindest einem ihrer Ränder (22, 24) verklebt und/oder verschweißt und/oder vernäht ist.

3. Vorrichtung nach Anspruch 1 oder 2, **dadurch gekennzeichnet, dass** die Hülle (16) in jeweils mindestens einen der Füllkörper (12) enthaltende Kammern untergliedert ist.

4. Vorrichtung nach Anspruch 3, **dadurch gekennzeichnet, dass** die Kammern durch Verschweißen und/oder Verkleben und/oder Vernähen des Hüllmaterials gebildet sind.

5. Vorrichtung nach einem der vorhergehenden Ansprüche, **dadurch gekennzeichnet, dass** die Hülle (16) aus einem Kunststoffmaterial gefertigt und durch Warmumformung, vorzugsweise durch wärmeunterstützte Biege- oder Faltprozesse, in zumindest anteilig formsteife Segmente (26) untergliedert ist, wobei zumindest in einem der Segmente (26) zumindest ein Füllkörper (12) aufgenommen ist.

6. Vorrichtung nach einem der vorhergehenden Ansprüche, **dadurch gekennzeichnet, dass** die Hülle (16) aus mehreren miteinander durch Verschweißen und/oder Verkleben und/oder Vernähen verbundenen Hüllenabschnitten (18, 20; 30, 32, 34) gefertigt ist.

7. Vorrichtung nach einem der vorhergehenden Ansprüche, **dadurch gekennzeichnet, dass** an der Hülle (16) mindestens ein Befestigungsabschnitt (36; 38) zum vorzugsweise lösbaren Befestigen der Hülle (16) im Tank vorgesehen ist.

8. Vorrichtung nach Anspruch 7, **dadurch gekennzeichnet, dass** am Befestigungsabschnitt (36, 38) ein Befestigungselement vorgesehen ist.

9. Vorrichtung nach Anspruch 7 oder 8, **dadurch gekennzeichnet, dass** am Befestigungsabschnitt (36, 38) mindestens eine Befestigungsöse (40) vorgesehen ist.

10. Vorrichtung nach einem der vorhergehenden Ansprüche, **dadurch gekennzeichnet, dass** die Hülle (16) mit Füllkörpern (12) gefüllt ist, von denen zumindest einer der Füllkörper (12) elastisch ausgebildet ist und ausgehend von seinem maximalen Volumen im entspannten Zustand auf einen Bruchteil seines maximalen Volumens zu verdichten ist und nach Wegnahme äußerer deformierender Kräfte wieder sein maximales Volumen einnimmt.

11. Vorrichtung nach Anspruch 10, **dadurch gekennzeichnet, dass** die Raumform der mit entspannten Füllkörpern (12) gefüllten Hülle (16) zumindest abschnittsweise der Raumform eines Abschnittes des Tanks entspricht, in welchen die Hülle (16) einzusetzen ist.

12. Vorrichtung nach Anspruch 10 oder 11, **dadurch gekennzeichnet, dass** die Hülle (16) und die darin enthaltenen Füllkörper (12) soweit zu verdichten sind, dass die Hülle (16) durch die Befüllungs- oder Belüftungsöffnung des Tanks in diesen einzubringen ist.

13. Vorrichtung nach einem der vorhergehenden Ansprüche, **dadurch gekennzeichnet, dass** der Füllkörper (12) aus einem Gewebe-, einem Gestrick- oder einem Gewirkschlauch gefertigt und zur Erhöhung seines Volumens in zumindest einem Bereich des Schlauches unter Bildung von Falten zusammengezogen ist.

14. Tank für ein flüssiges Medium, **dadurch gekennzeichnet, dass** im Tank eine Vorrichtung (10) nach einem der vorhergehenden Ansprüche angeordnet ist.
